(19) Europäisches Patentamt
European Patent Office
Office européen des brevets

(11) Numéro de publication: **0 406 135 A1**

# (12) DEMANDE DE BREVET EUROPEEN

(21) Numéro de dépôt: **90420305.6**

(22) Date de dépôt: **26.06.90**

(51) Int. Cl.5: **C08L 83/04**, C08K 5/3477, C08K 5/00, C08K 13/02

(30) Priorité: **29.06.89 FR 8909005**

(43) Date de publication de la demande: **02.01.91 Bulletin 91/01**

(84) Etats contractants désignés: **AT BE CH DE DK ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Perkin, Patrice**
**39, rue Boileau**
**F-69006 Lyon(FR)**

(74) Mandataire: **Trolliet, Maurice et al**
**RHONE-POULENC CHIMIE Service Brevets**
**Chimie Centre de Recherches des Carrières**
**B.P. 62**
**F-69192 Saint-Fons Cédex(FR)**

## (54) Composition organopolysiloxane monocomposante à stabilité au stockage ameliorée.

(57) La présente invention concerne une composition monocomposante diorganopolysiloxane stable au stockage à l'abri de l'humidité de l'air et réticulant en un élastomère silicone en présence d'humidité, comportant un diorganopolysiloxane à terminaison silanol, un cétiminoxysilane, un catalyseur de condensation et une charge, la composition étant stabilisée par une quantité efficace d'un isocyanurate de formule :

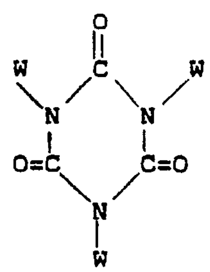

(1)

avec W = $(CH_2)_n$-N = C = O pour améliorer la stabilité au stockage.

Utilisation des compositions comme mastic dans le bâtiment (verre extérieur coloré, double vitrage).

EP 0 406 135 A1

## COMPOSITION ORGANOPOLYSILOXANE MONOCOMPOSANTE A STABILITE AU STOCKAGE AMELIOREE

La présente invention concerne une composition organopolysiloxane stable au stockage en l'absence d'humidité et durcissable en un élastomère autoadhérent en présence d'humidité comportant comme constituants essentiels un polymère $\alpha,\omega$-dihydroxydiorganopolysiloxane, un agent de réticulation cétiminoxysilane, une charge minérale et un catalyseur de durcissement. Des compositions de ce type sont bien connues depuis longtemps. Elles sont par exemple décrites dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

Ces compositions, dénommées par la suite compositions EVF oxime, sont notamment utilisées pour des applications de revêtement et de jointoiement et en particulier comme agent de scellage dans l'industrie du bâtiment pour réaliser des structures vitrées.

L'élastomère durci doit, dans cette application particulière, ne pas se fissurer, présenter un module d'élasticité convenable et adhérer fortement au verre et au matériau constitutif de la structure dans laquelle le verre est monté, tel que le bois, l'aluminium, le béton, le PVC (polychlorure de vinyle), les caoutchoucs naturels et synthétiques, la pierre, la faïence et la brique.

Les compositions élastomère EVF oxime de ce type, plus particulièrement quand elles présentent des charges minérales pulvérulentes du type quartz broyé, carbonate de calcium broyé ou de précipitation, silice de précipitation, peuvent présenter une stabilité insuffisante (inférieure à 6 mois) au stockage à l'abri de l'humidité de l'air se manifestant par une perte progressive plus ou moins rapide de l'extrudabilité, avec le plus souvent à une détérioration des propriétés d'adhérence.

Cette mauvaise tenue au stockage ne vient pas, comme dans le cas des compositions organopolysiloxanes à réticulant alcoxysilane; d'une mauvaise fonctionnalisation des huiles silicones $\alpha,\omega$-dihydroxy par le cétiminoxysilane. En effet les cétimininoxysilanes réagissent complètement avec les extrémités silanol de ces huiles à température ambiante.

Après de longues et coûteuses recherches, la Demanderesse a pu mettre en évidence que la dégradation au stockage des compositions EVF oxime semble essentiellement dûe à la présence d'eau introduite la plupart du temps par les charges pulvérulentes.

Un but de la présente invention est précisément de proposer un additif à un EVF oxime qui élimine les traces d'eau, améliore la stabilité au stockage (stabilité supérieure à 6 mois, de préférence supérieure à au moins 1 an) sans altérer les autres propriétés de la composition non réticulée (par exemple son extrudabilité) et de la composition réticulée (en particulier ses propriétés d'adhérence).

Ce but et d'autres sont atteints par la présente invention qui concerne en effet une composition monocomposante EVF oxime, caractérisée en ce que :

a) - elle comporte une quantité stabilisatrice efficace d'au moins un isocyanate de formule :

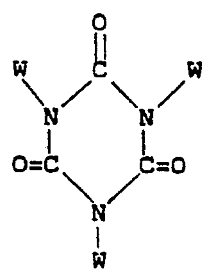

(1)

dans laquelle les symboles W, identiques ou différents, représentent un radical hydrocarboné monovalent de formule :

$-(CH_2)n - N = C = O$

n étant un nombre entier compris entre 1 et 12 inclus, et en ce que

b) - la composition EVF oxime ne comporte pas de composé porteur de fonction amine primaire ou secondaire.

Les produits de formule (1) ont déjà été décrits (EP-A-246 170) comme stabilisant des compositions monocomposantes EVF.

Cependant les compositions EVF à stabiliser selon EP-A-246 170 dont des compositions EVF alcoxy et

non pas EVF oxime. De plus, selon EP-A-246 170 les produits de formule (1) réagissent en premier lieu sur des catalyseurs à amine primaire et secondaire de fonctionnalisation, des huiles silicones hydroxylées, de tels catalyseurs (en particulier des amines organiques ou des alcoxyaminosilanes) étant exclus des compositions EVF oxime selon la présente invention.

Par quantité stabilisatrice efficace d'isocyanurate de formule (1) on entend selon l'invention une quantité telle que l'isocyanurate a réagi sur toutes les molécules d'eau présentes dans la composition monocomposante EVF oxime lors de son conditionnement dans un emballage étanche tels que cartouches ou fûts.

Comme indiqué ci-dessus, cette eau est principalement apportée par les charges pulvérulentes incorporées dans la composition EVF oxime.

Plus spécif iquement la présente invention vise une composition organopolysiloxane stable au stockage en l'absence d'humidité et durcissable en un élastomère en présence d'humidité, caractérisée en ce qu'elle comporte :

A. - 100 parties en poids d'au moins un polymère $\alpha,\omega$-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent des radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un cétiminoxysilane,

C. - une quantité stabilisatrice efficace d'au moins un isocyanurate de formule :

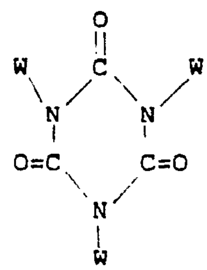

(1)

dans laquelle les symboles W, identiques ou différents, représentent un radical hydrocarboné monovalent de formule :

$-(CH_2)_n - N = C = O$

n étant un nombre entier compris entre 1 et 12 inclus,

D. - 5 à 250 parties en poids de charges minérales,

E. - 0,0004 à 3 parties en poids d'un catalyseur de durcissement qui est un composé d'un métal.

ladite composition étant exempte de composé porteur de fonction amine primaire ou secondaire.

Les polymères $\alpha,\omega$-di(hydroxy)diorganopolysiloxane A de viscosité 700 à 1 000 000 mPa.s à 25 °C, de préférence 1 000 à 700 000 mPa.s à 25 °C, sont des polymères linéaires, constitués essentiellement de motifs diorganosiloxy de formule précitée $T_2SiO$, et bloqués à chaque extrémité de leur chaîne par un groupe hydroxyle ; toutefois, la présence de motifs mono-organosiloxy de formule $TSiO_{1,5}$ et/ou de motifs siloxy de formule $SiO_2$, n'est pas exclue dans la proportion d'au plus 2 % par rapport au nombre de motifs diorganosiloxy.

Les radicaux hydrocarbonés, ayant de 1 à 10 atomes de C, substitués ou non par des atomes d'halogènes ou des groupes cyano, représentés par les symboles T, englobent :

- les radicaux alkyles et halogénoalkyles ayant de 1 à 10 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 1 à 10 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 4 atomes de carbone tels que les radicaux vinyle, allyle, butène-2 yle,
- les radicaux aryles et halogénoaryles mono-nucléaires ayant de 6 à 10 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux $\beta$-cyanoéthyle et $\gamma$-cyanopropyle, les radicaux méthyle, phényle, vinyle et trifluoro-3,3,3 propyle sont les radicaux préférés.

A titre d'exemples concrets de motifs représentés par la formule $T_2SiO$ on peut citer ceux de formules :

- $(CH_3)_2SiO$,
- $CH_3(CH_2 = CH)SiO$
- $CH_3(C_6H_5)SiO$
- $(C_6H_5)_2SiO$,
- $CF_3CH_2CH_2(CH_3)SiO$,
- NC - $CH_2CH_2(CH_3)SiO$,
- NC - $CH(CH_3)CH_2(CH_2 = CH)SiO$,
- NC - $CH_2CH_2CH_2(C_6H_5)SiO$.

Il doit être compris que l'on peut utiliser comme polymère A un mélange constitué de polymères α,ω-di(hydroxy)diorganopolysiloxane qui diffèrent entre eux par le poids moléculaire et/ou la nature des groupements liés aux atomes de silicium.

Ces polymères α,ω-di(hydroxy)diorganoplysiloxane A sont commercialisés ; en outre, ils peuvent être aisément fabriqués selon des techniques maintenant bien connues. Il est souhaitable d'utiliser ces polymères après les avoir dévolatilisés par exemple par le procédé de dévolatilisation décrit dans le brevet américain US-A-4 356 116.

Les agents réticulants B sont employés à raison de 0,5 à 20 parties, de préférence 1 à 18 parties, pour 100 parties de polymères α,ω-di(hydroxy)diorganopolysiloxanes A. Ce sont des composés organosiliciques portant au moins deux radicaux hydrolysables cétiminoxy par molécule, liés aux atomes de silicium.

De préférence, l'agent réticulant B répond à la formule générale :

$Y^1_fSiZ^1_{4-f}$

dans laquelle :

- le symbole $Y^1$ représente un radical hydrocarboné en $C_1$-$C_{10}$, substitué ou non par des atomes d'halogène, des groupes cyano,
- les symboles $z^1$, identiques ou différents, représentent des radicaux hydrolysables choisis parmi ceux de formules : $Z^2_2C = NO$,

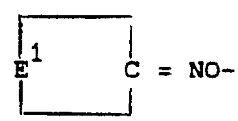
,

dans lesquelles les symboles $Z_2$, identiques ou différents, représentent des radicaux hydrocarbonés en $C_1$-$C_8$, le symbole $E^1$ représente un radical alkylène en $C_4$-$C_8$,

- le symbole f représente zéro ou un.

Le symbole $Y^1$ peut avoir la même signification que le symbole T des motifs précédents de formule $T_2SiO$ ; ainsi l'illustration donnée pour T convient également pour $Y^1$.

Les symboles $Z^2$ représentent des radicaux hydrocarbonés en $C_1$-$C_8$ englobent notamment :

- les radicaux alkyles en $C_1$-$C_8$ tels que les radicaux méthyle, éthyle, propyle, isopropyle, butyle, isobutyle, éthyl-2 hexyle, octyle,
- les radicaux cycloalkyles en $C_5$-$C_8$ tels que les radicaux cyclopentyle, cyclohexyle, méthylcyclohexayle,
- les radicaux aryles mono-nucléaires en $C_6$-$C_8$ tels que les radicaux phényle, tolyle, xylyle.

Le symbole $E^1$ représente un radical alkylène en $C_4$-$C_8$ qui peut répondre aux formules : $-(CH_2)_4-$, $--(CH_2)_5-$, $-(CH_2)_6-$, $-(CH_2)_7-$, $-CH_2-CH(C_2H_5)(CH_2)_3-$, $-CH_2-CH_2-CH(CH_3)CH_2CH_2$.

Comme exemples de silanes B on peut citer les silanes de formules :

- $CH_3Si[ON = C(CH_3)_2]_3$ , $CH_3Si[ON = C(CH_3)C_2H_5]_3$ ,

- $CH_2 = CHSi[ON = C(CH_3)C_2H_5]_3$ , $C_6H_5Si\ ON[= C(CH_3)_2]_3$ ,

- $CH_3Si[ON = C\ (C_2H_5)(CH_2)_3CH_3]_3$ ,

- $(CH_3)_2C = NOSi[ON = C(CH_3)C_2H_5]_3$ ,

- $CH_3Si[ON = C\ (CH_2)_4]_3$

- $CH_3Si[ON = C\ (CH_2)_5]_3$

Les isocyanurates (C) de formule (1) sont des produits bien connus dont les procédés de préparation sont notamment décrits dans le brevet européen EP-A-57 653 cité comme référence.

Les isocyanurates préférés sont ceux pour lesquels dans la formule (1) n est compris en tre 4 to 8 inclusivement et en particulier celui pour lequel n = 6 et commercialisé par la Société RHONE-POULENC sous la dénomination commerciale TOLONATE HDT®.

Les quantités stabilisatrices de produit de formule (1) à utiliser dépendent de la quantité d'eau présente dans la composition EVF lors de sa mise sous emballage étanche comme indiqué ci-dessus.

Cette quantité peut être mesurée et on recommande selon l'invention d'utiliser alors de 1 à 10 fois, de préférence de 1,5 à 5 fois, la quantité stoechiométrique d'isocyanurate nécessaire pour transformer en premier lieu toute l'eau en carbamate.

Pour fixer les idées, dans la plupart des cas, on peut par exemple utiliser de 0,001 à 10 parties en poids, de préférence de 0,01 à 5 parties en poids d'isocyanurate pour 100 parties en poids d'huiles A.

La présente invention a permis de mettre également en évidence que le carbamate ainsi obtenu et l'isocyanurate en excès n'avait aucun effet néfaste sur les propriétés mécaniques de l'élastomère et sur l'adhérence. Bien au contraire on a découvert que ces produits préviennent l'apparition de fissures dans les élastomères. Or cette résistance à la fissuration est un point fondamental dans les applications verre extérieur collé (Structural Glazing) et double vitrage.

Par ailleurs, les additifs isocyanurates à fonction isocyanate selon l'invention présentent la propriété de présenter une très faible tension de vapeur, de ne pas colorer les compositions EVF après chauffage, d'être stables jusqu'à des températures pouvant dépasser 220 °C, d'être parfaitement miscibles avec les silicones et d'être inodores et non toxiques.

L'utilisation de l'isocyanurate C évite donc l'opération coûteuse soit de déshydratation des charges par chauffage, soit de traitement de ces charges par un produit hydrophobe comme par exemple le carbonate de calcium traité par l'acide stéarique.

Les charges minérales D sont utilisées à raison de 5 à 250 parties, de préférence 20 à 200 parties, pour 100 parties des polymères $\alpha,\omega$-di(hydroxy)diorganopolysiloxanes A.

Ces charges peuvent se présenter sous la forme de produits très finement divisés dont le diamètre particulaire moyen est inférieur à 0,1 micromètre. Parmi ces charges figurent les silices de combustion et les silices de précipitation ; leur surface spécifique BET est généralement supérieure à 40 $m^2$/g.

Ces charges peuvent également se présenter sous la forme de produits plus grossièrement divisés, de diamètre particulaire moyen supérieur à 0,1 micromètre. Comme exemples de telles charges, on peut citer le quartz broyé, les silices de diatomées, le carbonate de calcium, l'argile calcinée, l'oxyde de titane du type rutile, les oxydes de fer, de zinc, de chrome, de zirconium, de magnésium, les différentes formes

d'alumine (hydratée ou non), le nitrure de bore, le lithopone, le métaborate de baryum, le sulfate de baryum, les microbilles de verre ; leur surface spécifique est généralement inférieure à 30 $m^2/g$.

Ces charges D peuvent avoir été modifiées en surface par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganonocyclopolysiloxanes (brevets français FR-A-1-126 884, FR-A-1 136 885, FR-A-1 236 505 ; brevet anglais GB-A-1 024 234). Les charges traitées renferment, dans la plupart des cas, de 3 à 30 % de leur poids de composés organosiliciques.

Les charges D peuvent être constituées d'un mélange de plusieurs types de charges de granulométrie différente ; ainsi par exemple, elles peuvent être constituées de 5 à 95 % de silices finement divisées de surface spécifique BET supérieure à 40 $m^2/g$ et de 95 à 5 % de silices plus grossièrement divisées de surface spécifique inférieure à 30 $m^2/g$ ou de carbonate de calcium traité ou non traité.

Les compositions contiennent un catalyseur E qui est un compose d'un métal choisi généralement parmi l'étain, le fer, le titane et le zirconium.

On utilise généralement de 0,0004 partie à 3 parties de E pour 100 parties de A.

En ce qui concerne l'étain, les catalyseurs les plus utilisés sont les dicarboxylates de dialkylétain en particulier le dilaurate ou le diacétate de dibutylétain (ouvrage de NOLL "CHEMISTRY AND TECHNOLOGY OF SILICONES, page 337, Edition 1968), et les diversates de dibutylétain (brevet français FR-A-2 066 159).

On peut également utiliser les produits de réactions de dicarboxylates de dialkylétain sur les polyalcoxysilanes ou les polysilicates d'alkyle (brevets américains US-A-3 186 963 et US-A-3 862 919 et le brevet belge BE-A-842 305).

On peut également utiliser les chelates d'étain comme décrits dans les brevets européens EP-A-147 323 et EP-A-235 049).

En ce qui concerne le titane et le zirconium on peut utiliser les catalyseurs, objets du brevet européen EP-A-102 268.

Tous les brevets ci-dessus mentionnant des catalyseurs de durcissement utilisables sont cités comme références.

Outre les constituants A à E décrits ci-dessus, les compositions selon l'invention peuvent contenir d'autres ingrédients.

Parmi ces ingrédients figurent des composés organosiliciques, principalement des polymères qui ont la faculté d'agir sur les caractéristiques physiques des compositions conformes à l'invention et/ou sur les propriétés mécaniques des élastomères silicones issus de ces compositions, utilisés à raison de 1 à 150 parties pour 100 parties de A.

Ces composés sont bien connus, ils comprennent par exemple :

- des polymères $\alpha,\omega$-bis(triorganosiloxy)diorganopolysiloxanes de viscosité d'au moins 10 mPa.s à 25 °C dont les radicaux organiques liés aux atomes de silicium sont choisis parmi les radicaux méthyle, vinyle, phényle ; de préférence sont utilisées des huiles $\alpha,\omega$-bis(triméthylsiloxy)diméthylpolysiloxanes de viscosité 10 mPa.s à 25 °C à 1 500 mPa.s à 25 °C,
- des polymères méthylpolysiloxanes ramifiés, liquides, renfermant de 0,1 à 8 % de groupes hydroxyles liés aux atomes de silicium, formés de motifs $(CH_3)_3SiO_{0,5}$, $(CH_3)_2SiO$, $CH_3SiO_{1,5}$ répartis de manière à conduire à un rapport $(CH_3)_3SiO_{0,5}/(CH_3)_2SiO$ de 0,01 à 0,15 et à un rapport $CH_3SiO_{1,5}/(CH_3)_3SiO$ de 0,1 à 1,5,

Les polymères $\alpha,\omega$-bis(triorganosiloxy)diorganopolysiloxanes précédents peuvent être remplacés totalement ou partiellement par des composés organiques inertes vis-à-vis des divers constituants des bases et miscibles au moins avec les polymères diorganopolysiloxanes A.

Comme exemples de plastifiants organiques on peut en particulier citer des coupes pétrolières de point d'ébullition supérieur à 200 °C, formées d'un mélange d'hydrocarbures aliphatiques et/ou aromatiques, des polybutylènes, de préférence de faible poids moléculaire, comme décrits dans les brevets français FR-A-2 254 231, FR-A-2 293 831 et FR-A-2 405 985, les produits d'alkylation du benzène en particulier, les polyalkylbenzènes obtenus par alkylation du benzène par des oléfines à longue chaîne linéaire ou ramifiée, en particulier des oléfines à 12 atomes de carbone issues de la polymérisation du propylène, comme décrits par exemple dans le brevet français FR-A-2 446 849.

On peut également utiliser les polymères mixtes organiques polydiorganosiloxane tels que les copolymères à blocs polyoxyalkylènes polyorganosiloxanes, des esters phosphoriques (FR-A-2 372 203), du phosphate de trioctyle (FR-A-2 415 132), des esters dialcooliques d'acides dicarboxyliques (US-A-2 938 007) et des cycloalkylbenzènes (FR-A-2 392 476).

Les produits d'alkylation du benzène de poids moléculaire supérieur à 200, en particulier les alkylbenzènes et les polyalkylbenzènes sont les plastifiants organiques préférés.

Des ingrédients non organosiliciques peuvent aussi être introduits, par exemple, des stabilisants thermiques. Ces composés améliorent la résistance à la chaleur des élastomères silicones. Ils peuvent être choisis parmi les sels d'acides carboxyliques, oxydes et hydroxydes de terres rares, et plus spécialement les oxydes et hydroxydes ceriques ainsi que parmi le dioxyde de titane de combustion et les divers oxydes de fer. On emploie avantageusement de 0,1 à 15 parties, de préférence de 0,15 à 12 parties de stabilisants thermiques pour 100 parties des diorganopolysiloxanes A.

Selon un mode de réalisation préféré, la composition selon l'invention comporte en outre un agent d'adhérence F qui est un polyalcoxysilane porteur d'un radical époxy-fonctionnel ayant de 4 à 20 atomes de carbone de formule :

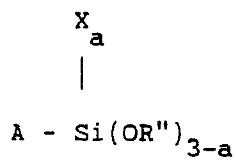

dans laquelle :

- x est un radical hydrocarboné choisi parmi les radicaux alkyle en $C_1$-$C_4$, vinyle et phényle,
- R" représente un groupe alkyle ou alcoxyalkyle ayant moins de 8 atomes de carbone,
- A est un radical organique hydrocarboné porteur d'un groupe époxy ayant de 4 à 20 atomes de carbone,
- a est 0 ou 1.

On utilise généralement de 0,1 à 15 parties, de préférence de 1 à 5 parties de silane F pour 100 parties d'huile silicone A.

Des exemples spécifiques de ces silanes sont les suivants :

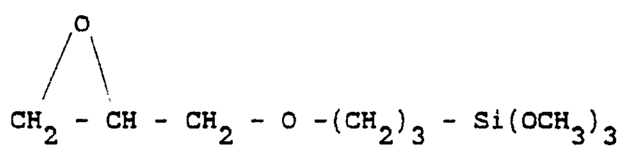

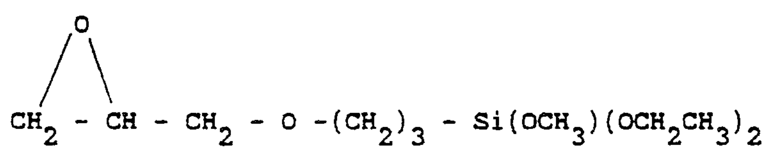

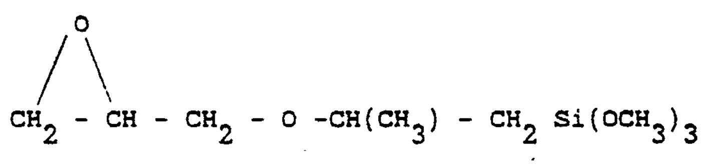

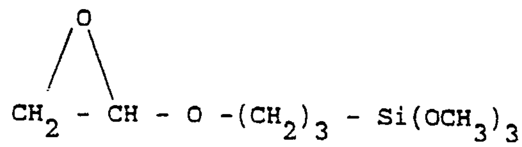

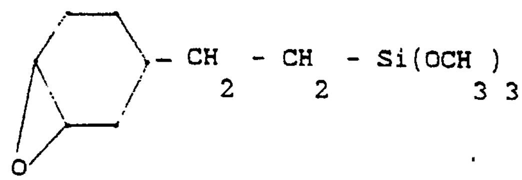

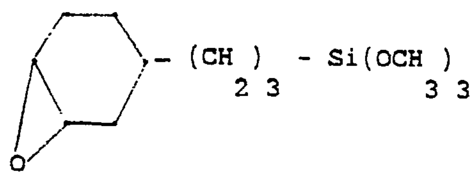

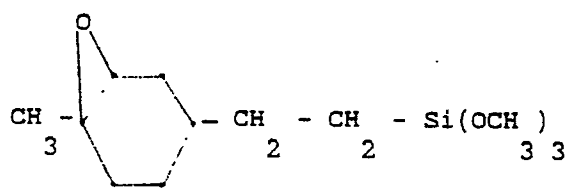

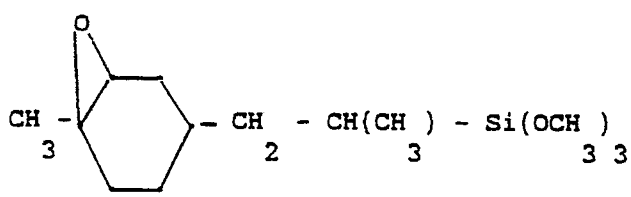

Pour fabriquer les compositions conformes à l'invention, il est nécessaire d'utiliser un appareillage qui permete de mélanger intimement à l'abri de l'humidité, avec et sans apport de chaleur, les divers constituants fondamentaux auxquels sont éventuellement ajoutés les adjuvants et additifs précités.

Il est recommandé selon l'invention soit de traiter par simple mélange la charge D avec l'isocyanurate C, soit d'introduire dans la composition l'isocyanurate C juste après la charge D.

Un procédé plus particulièrement recommandé est celui qui consiste à introduire dans un mélangeur, sous chauffage éventuel à une température de 50-150 °C, à l'abri de l'humidité de l'air les ingrédients dans l'ordre suivant : l'huile A, éventuellement le plastifiant, le réticulant B, la charge D, l'isocyanurate C, le catalyseur E et, éventuellement le silane époxydé F.

On effectue ensuite de préférence un dégazage sous une pression réduite comprise par exemple entre 0,01 et 10 KPa.

Les compositions selon l'invention sont stables au stockage pendant au moins 6 mois et même un an, et sont plus particulièrement utilisables pour le jointoiement dans l'industrie du bâtiment, l'assemblage des matériaux les plus divers (métaux, matières plastiques, caoutchoucs naturels et synthétiques, bois, carton, faïence, brique, céramique, verre, pierre, béton, éléments de maçonnerie), l'isolation de conducteurs électriques, l'enrobage de circuits électroniques, la préparation de moules servant à la fabrication d'objets en résines ou mousses synthétiques.

Les compositions selon l'invention peuvent être éventuellement utilisées après dilution dans des composés organiques liquides, les diluants sont de préférence des produits usuels commercialisés choisis parmi :

- les hydrocarbures aliphatiques, cycloaliphatiques, aromatiques, halogénés ou non, tels que le n-hepatne, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène,
- les cétones aliphatiques et cycloaliphatiques tels que la méthyléthylcétone, la méthylisobutylcétone, la cyclohexanone, l'isophorone,
- les esters tels que l'acétate d'éthyle, l'acétate de butyle, l'acétate d'éthylglycol.

La quantité de diluant demeure en général peu importante, elle est en général inférieure à 50 % en poids par rapport au poids total de la composition.

Les dilutions précitées de ces compositions dans des diluants organiques sont plus spécialement utilisables pour l'imprégnation en couches minces d'articles tissés ou non-tissés, l'enduction de feuilles en métal ou en matière plastique ou cellulosique ; toutefois elles peuvent être projetées, par exemple par pulvérisation à l'aide d'un pistolet à peintures, sur n'importe quels substrats, pour lesquels il est nécessaire d'obtenir un revêtement d'épaisseur de l'ordre de 5 à 300 µm. Après la projection des dilutions, les diluants s'évaporent et les compositions libérées durcissent en un film caoutchouteux parfaitement uniforme.

Le temps de durcissement se situe habituellement entre 5 minutes et plusieurs heures ne dépassant pas 10 heures ; cette durée dépend des facteurs déjà cités à propos de la durée de durcissement des compositions déposées en couches plus épaisses et également de la rapidité avec laquelle les diluants s'évaporent. Cette technique de dépôt par pulvérisation est très pratique pour enduire d'un film mince de très grandes surfaces et plus spécialement les coques de navires et les filets aquacoles. Le dépôt d'un film silicone antiadhérent sur les surfaces des bateaux en contact avec l'eau de mer évite l'encrassement de ces surfaces dû à la fixation et au développement d'organismes marins tels que les algues, bernacles, huitres, ascidies ; cette application figure par exemple dans le brevet américain US-A-3 702 778.

Par ailleurs, ce film d'élastomère peut servir comme revêtement antiadhérent inerte, non toxique, de divers substrats en contact avec des produits alimentaires tels que (1) des papiers d'emballage pour conf iserie, ou viandes congelées, (2) des bacs métalliques utilisables pour la préparation de glaces et sorbets et (3) des filets métalliques dans lesquels on dépose et moule la pâte à pain et que l'on introduit avec leur contenu dans les fours pour la cuisson du pain. Il peut être employé également, comme revêtement antiadhérent et non toxique de matériaux en contact avec le corps humain tels que compresses, pansements spéciaux pour brûlures.

Dans ce qui suit ou ce qui précède, sauf mentions contraires, les parties et pourcentages sont en poids.

EXEMPLE 1 :

Dans un malaxeur cylindrique à axe vertical muni d'une hélice tripale, on introduit à l'abri de l'air, successivement et dans l'ordre :
- 100 parties d'huile α,ω-dihydroxypolydiméthylsiloxane de viscosité 20 000 mPa.s à 25 °C,
- 40 parties d'huile polydiméthylsiloxane bloquée triméthylsilyle, de viscosité 1 000 mPa.s à 25 °C,
- 10 parties d'un mélange de méthyltris(méthyléthylcétiminoxy)silane et vinyltris(méthyléthylcétiminoxy)-silane suivant un rapport pondéral 1/1,
- 15 parties de silice de pyrogénation de surface spécifique BET de 150 $m^2/g$,
- 60 parties de quartz broyé de granulométrie moyenne de 5 µm,
- 2,3 parties de tris(6-isocyanatohexyl)isocyanurate de formule :

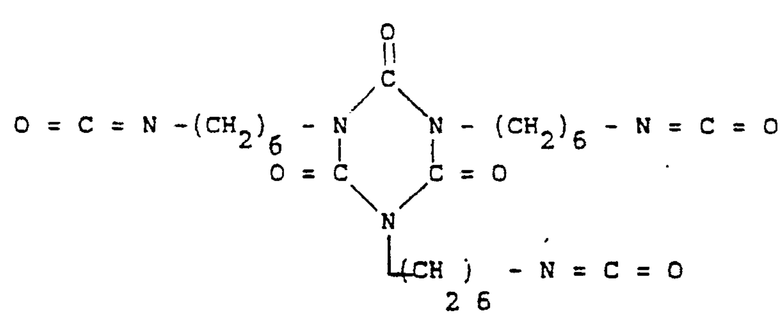

- 0,1 partie de dilaurate de dibutylétain,

- 2 parties de $\gamma$-glycidoxypropyltriméthoxysilane.

Du fait des simples forces de frottement, la température au sein du malaxeur passe de 25 à 60 °C environ.

L'opération de mélangeage est terminée par un dégazage sous une pression réduite comprise entre 2,5 et 4 KPa.

La composition EVF oxime ainsi obtenue est conditionnée dans différentes cartouches étanches à l'humidité de l'air.

L'eau apportée à la composition par le quartz correspond à 0,15 % du poids dudit quartz broyé.

-EXEMPLES 2, 3 ET EXEMPLES COMPARATIFS 4C, 5C :

- Exemple 2 : on répète exactement le mode opératoire de l'exemple 1, sauf que l'on introduit 4,6 parties d'isocyanurate.
- Exemple 3 : on répète exactement le mode opératoire de l'exemple 2, sauf que l'on introduit l'isocyanurate préalablement mélangé à l'époxysilane.
- Exemple 4C : on répète exactement le mode opératoire de l'exemple 1, sauf que l'on n'introduit pas d'isocyanurate.
- Exemple 5C : on répète exactement le mode opératoire de l'exemple 4C, sauf que le quartz broyé est préalablement étuvé à 100 °C jusqu'à ce qu'il ne contienne plus de traces d'eau.

-Exemple 6 : Evaluation de la stabilité au stockage :

On évalue l'évolution de l'extrudabilité des compositions des exemples 1, 2, 3, 4C, 5C en fonction de la durée t (en mois) de stockage en cartouches.

L'extrudabilité est représentée par le débit Q en g/mn mesurée en sortie de cartouche de diamètre 5,7 mm et sous une pression manométrique de 0,2 MPa.

. Les résultats obtenus concernant Q (t) sont rassemblés dans le tableau 1 ci-après.

TABLEAU 1

| Q (t) (g/mn) \ exemple | 4C | 5c | 1 | 2 | 3 |
|---|---|---|---|---|---|
| t = 0 | 320 | 300 | 390 | 230 | 290 |
| t = 1 mois | 200 | 280 | 340 | 250 | 280 |
| t = 2 mois | 160 | 290 | 350 | 260 | 240 |
| t = 3 mois | 120* | 305 | 330 | 250 | 230 |
| t = 4 mois | 50** | 290 | 300 | 250 | 225 |

* : produit viscoélastique

** : pratiquement non extrudable

On observe une dégradation du produit témoin (exemple 4C) qui non seulement présente une

extrudabilité réduite après 3 mois de conservation mais devient difficile à appliquer à cause de sa consistance viscoélastique.

L'étuvage du quartz (exemple 5C) permet d'obtenir une composition relativement stable, mais le procédé n'est pas industrialisable.

Les produits des exemples 1, 2, 3 sont tous utilisables et montrent une assez bonne stabilité de l'extrudabilité en fonction de la durée du stockage.

Quant aux propriétés mécaniques des élastomères obtenus après réticulation à l'air, on obtient des valeurs assez proches, quels que soient les exemples - (films épaisseur 2 mm) :

Dureté Shore A : 33 à 35
Module 100 % : 0,8 à 1,1 MPa
Allongement rupture : 290 à 320 %
Résistance rupture : 2,7 à 3,3 MPa

Les élastomères contenant de l'isocyanate (exemples 1, 2, 3) réticulent bien en épaisseur (12 mm) alors que le témoin (exemples 4C et 5C) présente une phase mal réticulée à l'intérieur du joint.

L'adhérence des élastomères issue des exemples 4C, 5C, 1, 2, 3 est comparable sur le verre et l'aluminium anodisé. Ce résultat démontre que l'addition d'isocyanurate ne perturbe pas cette propriété.

- EXEMPLE 7 : Appréciation de l'apparition de fissures :

Pour évaluer cette caractéristique, on emprisonne environ 50 g d'une composition d'EVF des exemples 1, 2, 3, 4C, 5C entre deux plaques rectangulaires (50 x 70 mm) maintenues espacées par deux cales de 10 mm. On laisse la composition durcir à l'air et on observe l'aspect de la masse journellement tout au long de la vulcanisation pendant un mois.

On effectue le test avec les deux plaques maintenues verticalement et avec le deux plaques posées à plat.

Les élastomères issus des compositions des exemples 1, 2, 3 ne présentent aucune fissuration, les élastomères issus des compositions des exemples 4C et 5C sont la plupart du temps fissurés, en particulier lorsque les deux plaques sont posées à plat.

## Revendications

1. - Composition organopolysiloxane stable au stockage en l'absence d'humidité et durcissable en un élastomère en présence d'humidité, caractérisée en ce qu'elle comporte :

A. - 100 parties en poids d'au moins un polymère $\alpha,\omega$-dihydroxydiorganopolysiloxane de viscosité 700 à 1 000 000 mPa.s à 25 °C, formé d'une succession de motifs diorganosiloxy de formule $T_2SiO$, dans laquelle les radicaux T, identiques ou différents, représentent radicaux hydrocarbonés ayant de 1 à 10 atomes de carbone, au moins 50 % en nombre des radicaux T étant des groupes méthyle,

B. - 0,5 à 20 parties en poids d'au moins un agent de réticulation comportant au moins un cétiminoxysilane,

C. - une quantité stabilisatrice efficace d'au moins un isocyanurate de formule :

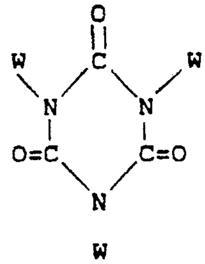

(1)

dans laquelle les symboles W, identiques ou différents, représentent un radical hydrocarboné monovalent de formule :

$-(CH_2)_n - N = C = O$

n étant un nombre entier compris entre 1 et 12 inclus, D. - 5 à 250 parties en poids de charges

minérales,

E. - 0,0004 à 3 parties en poids d'un catalyseur de durcissement qui est un composé d'un métal,

ladite composition étant exempte de composé porteur de fonction amine primaire ou secondaire.

2. - Composition selon la revendication 1, caractérisée en ce que dans la formule (1) n = 6.

3. - Composition selon l'une quelconque des revendications précédentes, caractérisée en ce qu'on utilise de 0,001 à 10 parties en poids d'isocyanurate C pour 100 parties en poids de polymère A.

4. - Composition selon l'une quelconque des revendications précédentes, caractérisée en ce que la charge D est choisie parmi les silices de pyrogénation, les silices de précipitation, le quartz broyé, les silices de diatomées, le carbonate de calcium traité ou non traité, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, le sulfate de baryum, les microbilles de verre.

5. - Composition selon l'une quelconque des revendications 1 à 4, caractérisée en ce qu'elle comporte en outre, pour 100 parties en poids de polymère A, de 0,1 à 15 parties en poids d'un polyalcoxysilane de formule :

$$\begin{array}{c} X_a \\ | \\ A - Si(OR")_{3-a} \end{array}$$

dans laquelle :

- X est un radical hydrocarboné choisi parmi les radicaux alkyle en $C_1$-$C_4$, vinyle et phényle,
- $R''$ représente un groupe alkyle ou alcoxyalkyle ayant moins de 8 atomes de carbone,
- A est un radical organique hydrocarboné porteur d'un groupe époxy ayant de 4 à 20 atomes de carbone,
- a est 0 ou 1.

Office européen des brevets

# RAPPORT DE RECHERCHE EUROPEENNE

Numero de la demande

EP 90 42 0305

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | EP-A-0 246 170 (RHONE-POULENC)<br>* Revendication 1 *<br>--- | 1 | C 08 L 83/04<br>C 08 K 5/3477<br>C 08 K 5/00<br>C 08 K 13/02 |
| A | US-A-4 514 529 (M.D. BEERS)<br>* Revendication 1 *<br>--- | 1 | |
| A | EP-A-0 208 963 (BAYER)<br>* Revendication 1 *<br>--- | 1 | |
| A | FR-A-2 539 422 (RHONE-POULENC)<br>* Revendication 1 *<br>----- | 1 | |
| | | | **DOMAINES TECHNIQUES RECHERCHES (Int. Cl.5)** |
| | | | C 08 L<br>C 08 K |

Le présent rapport a été établi pour toutes les revendications

| Lieu de la recherche | Date d'achèvement de la recherche | Examinateur |
|---|---|---|
| LA HAYE | 15-10-1990 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)